# EUROPÄISCHE PATENTSCHRIFT

(11) **EP 2 819 213 B1**
(45) Veröffentlichungstag und Bekanntmachung des Hinweises auf die Patenterteilung: **12.09.2018**
(21) Anmeldenummer: 14170687.9
(22) Anmeldetag: 30.05.2014
(51) Int. Cl.: H01M 2/14, H01M 2/16, H01M 4/66, H01M 4/62, H01M 4/139, H01M 4/04

(54) **Ungefüllte und gefüllte Gussmasse, insbesondere zur Herstellung beschichteter Metallfolien, und deren Verwendung für Elektroden oder Separatoren in Akkumulatoren**
Unfilled and filled casting material, in particular for producing coated metal films, and their use for electrodes or separators in batteries
Coulées non remplies et remplies, notamment pour la fabrication de feuilles métalliques revêtues et leur utilisation pour des électrodes ou des séparateurs dans des accumulateurs

(30) Priorität: 10.06.2013 DE 102013106021
(43) Veröffentlichungstag der Anmeldung: 31.12.2014
(73) Patentinhaber: Custom Cells Itzehoe GmbH, 25524 Itzehoe (DE)
(72) Erfinder: Thönnessen, Torge, 22605 Hamburg (DE); Pfeifer, Verena, 64686 Lautertal (DE)
(74) Vertreter: Strehl Schübel-Hopf & Partner

(56) Entgegenhaltungen:
- EP-A1- 2 634 842
- EP-A2- 1 011 157
- DE-A1- 19 839 217
- "Reynolds-Zahl", Wikipedia, der freien Enzyklopädie , 13 April 2017 (2017-04-13), pages 1-6, Retrieved from the Internet: URL:https://de.wikipedia.org/wiki/Reynolds -Zahl [retrieved on 2017-07-02]
- B. A. Wolf: "Solubility of polymers", PURE & APPLIED CHEMISTRY, vol. 57, no. 2, 1 January 1985 (1985-01-01), XP055390310, GB ISSN: 0033-4545, DOI: 10.1351/pac198557020323

## Beschreibung

Die vorliegende Erfindung betrifft Gussmassen gemäss Anspruch 1 mit mindestens zwei verschiedenen Binder-Polymeren und mindestens zwei verschiedenen Lösungsmitteln. Diese Gussmassen können unter anderem zur Herstellung von Elektrodenpasten mit partikelförmigen Elektrodenmaterialien gefüllt und in dieser Form als vergleichsweise sehr gut haftende Beschichtungen auf Metallfolien aufgebracht werden. Die beschichteten Metallfolien eignen sich ihrerseits als Elektrodenfolien in elektrochemischen Speicherelementen.

Mit Hilfe von Folientechnologie gefertigte elektrochemische Speicherelemente sind allgemein bekannt. Sie weisen als Elektroden folienförmige Anoden und Kathoden auf, die durch einen - in der Regel ebenfalls folienförmigen - Separator voneinander getrennt und jeweils mit einem Stromableiter verbunden sind, über den eine Ankontaktierung erfolgt.

Elektrochemische Energiespeicher auf Basis von Lithium-Akkumulatoren haben eine sehr große wirtschaftliche Bedeutung erlangt. Sie werden derzeit als eine der aussichtsreichsten Optionen für die Einführung von Hybrid- oder komplett elektrisch betriebenen Fahrzeugen betrachtet. Dabei müssen die Energiespeicher zahlreichen Anforderungen gerecht werden. Während bei Verbraucheranwendungen wie in Mobiltelefonen oder dergleichen in erster Linie eine hohe volumetrische sowie gravimetrische Energiedichte im Vordergrund steht, kommen bei Fahrzeuganwendungen unter anderem Schnellladefähigkeit und hohe Pulsbelastbarkeit, also hohe Leistungsdichte, und weite Temperatureinsatzbereiche sowie eine hohe Eigensicherheit hinzu. Fast alle Anwendungen haben gemein, dass die Lithium-Akkumulatoren günstig herstellbar sein sollen. Damit gehen umfangreiche Herausforderungen für eine sichere Prozessierbarkeit aller Teilschritte der Produktion einher. Zusätzlich steht die Lithium-Akkumulatorfertigung vor der Herausforderung, teure und giftige Edukte sowie Prozesshilfsmittel zu vermeiden, um wiederum negative Auswirkungen auf die Umwelt zu begrenzen und gleichzeitig die Herstellungskosten zu reduzieren.

In Lithium-Ionen-Zellen werden die Folien in der Regel zu einem mehrlagigen Wickelkörper verarbeitet und in ein festes Metallgehäuse eingepresst. In dieses wird dann der flüssige Elektrolyt gegeben, und anschließend wird das Batteriegehäuse hermetisch verschlossen. Bei Lithium-Polymer-Zellen (LIPO) handelt es sich im Gegensatz hierzu um Flachzellen, hier werden die Elektrodenfolien typischerweise gestapelt und z.B. unter Druck- und gegebenenfalls Temperatureinwirkung oder durch Verkleben innig miteinander verbunden. Der Batteriekörper wird in eine metallisierte Kunststofffolie, die eine Gehäusefunktion übernimmt, eingebracht, mit Elektrolyt befüllt und dann durch Versiegeln der Gehäusefolienberandung verschlossen. Der Elektrolyt wird bei diesem Zelltyp im Batteriekörper in Mikroporen inkorporiert, die in der Elektroden- und Separatorstruktur vorhanden sind, oder durch Gelifizierung des Polymerbinders in den Schichten absorbiert und immobilisiert.

Die Elektrodenfolien werden in beiden Fällen in der Regel in einem Rolle-zu-Rolle-Prozess unter Verwendung von Gussmassen als Edukt hergestellt, die aus einer Lösungsmittel-BinderLösung bestehen, in die partikelförmiges, elektrochemisch aktives bzw. aktivierbares Material mit einer bestimmten Korngrößenverteilung eingearbeitet ist. Das elektrochemisch aktive bzw. aktivierbare Anodenmaterial kann z.B. aus amorphen Kohlenstoffpartikeln bestehen, die in einer Polymermatrix als Binder eingebunden vorliegen. Um die ionische Leitfähigkeit zwischen den Kohlenstoffpartikeln in der Elektrode herzustellen, wird in die Anode ein Flüssigelektrolyt inkorporiert. Dieser wird in Poren bzw. in der Polymermatrix aufgenommen. Materialien für die Kathode, wie zum Beispiel LiCoO₂, werden in fertigungstechnisch vergleichbarer Weise hergestellt und in Folien überführt.

Für Separatoren sind verschiedene Wege zur Herstellung bekannt. So gibt es die Möglichkeit, Flüssigelektrolyte zu gelifizieren und sie so in Folien umzuarbeiten. Eine andere Vorgehensweise besteht darin, eine Folie mit feinporiger Schwammstruktur herzustellen und diese nach Fertigstellung des Folienverbundes durch Imprägnierung in einem Flüssigelektrolyt ionisch leitfähig zu machen. Zur Verbesserung der Flüssigelektrolyt-Aufnahme kann die Polymermatrix poröse, inerte anorganische Teilchen enthalten. Die DE 198 39 217 A1 beschreibt eine Möglichkeit, Feststoffionenleiter in eine Polymermatrix einzubinden und so eine Separatorfolie herzustellen. Auch partikelförmige Feststoffionenleiter sollen im Rahmen der vorliegenden Erfindung unter den Ausdruck "elektrochemisch aktiv" bzw. "elektrochemisch aktivierbar" subsumiert werden, weil sie im Separator eine in Hinblick auf den lonentransport aktive Funktion ausüben.

Materialien mit kleinen Partikelgrößen benötigen bei der Verarbeitung zur Batterieelektrode einen hohen Binderanteil, um den mechanischen Zusammenhalt der Elektrode zu gewährleisten. Da Binder in der Elektrode eine weitestgehend inaktive Substanz darstellt, wird die Energiedichte der Zelle durch einen hohen Binderanteil in Relation zum Aktivmaterial reduziert. Werden zur Erreichung einer gewünschten Zielkapazität eine größere Anzahl von Zellelementen einer bestimmten Dicke parallel geschaltet, kommt es im Vergleich zu dickeren Elektroden zu einer weiteren Reduktion der Energiedichte, da vergleichsweise viel Separatormaterial und metallische Stromableiter in der Zelle verarbeitet werden müssen, die bezogen auf die Speicherfähigkeit der Zelle inaktives Material darstellen. Eine hochbelastbare Elektrode nach dem Stand der Technik zieht insgesamt eine reduzierte Energiedichte nach sich.

Die lösungsmittelhaltige, mit elektrochemisch aktiven, im Falle von Separatorfolien ggf. statt dessen mit inerten Partikeln befüllte Gussmasse (in der Regel mit einem Lösungsmittelanteil zw. 20% und 70%) wird auf eine Metall- oder Kunststofffolie (z.B. Cu, Ni, Al mit zwischen 10 und 100 µm Folienstärke oder z.B. eine ca. 100 µm dicke PET-Folie) aufgebracht, und das Lösungsmittel wird in einem nachgeschaltetem Trocknungsprozess (Infrarot, Umluft etc.) ausgetrieben. Zurück bleibt ein trockener Auftrag (in der Regel mit einer Trockenschichtdicke (TSD) zwischen 20 µm und 1000 µm), der im Falle von Elektrodenfolien zu einem hohen Anteil aus lithiumeinlagerungsfähigen Materialien (in der Regel zwischen 65% und 98% Massenanteil), gegebenenfalls Zusatzstoffen zur Leitfähigkeitsverbesserung (z.B. Ruß oder Graphit, in der Regel zwischen 1% -15% Massenanteil) und einem polymeren Binder (in der Regel zw. 1% und 25% Massenanteil) besteht. Der Binder dient dem inneren Zusammenhalt der Schicht und der Haftung auf dem Metallsubstrat. Falls beim Beschichtungsprozess auf Kunststofffolie beschichtet wurde, wird gegebenenfalls anschließend eine Transfer-Lamination auf eine Metallfolie oder ein Streckmetall (eine Streckmetallfolie) durchgeführt.

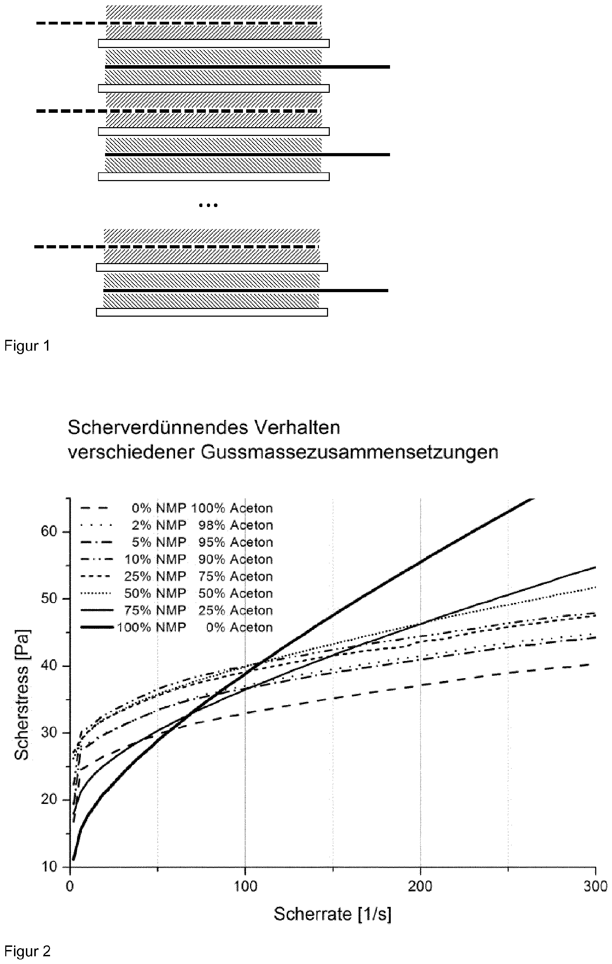

Die lösungsmittelhaltige Gussmasse wird meist in einem Rührverfahren hergestellt, wobei typischerweise ein organisches Lösungsmittel vorgelegt und mit einem Polymerbinder (z.B. PVDF mit einem mittleren Molekulargewicht Mn von typischerweise zwischen 300.000 g/mol und 2.000.000 g/mol) versetzt wird. Nach dem Lösen des Binders werden die Leitfähigkeitsvermittler, die Zusatzstoffe und die Aktivmaterialien nacheinander zugegeben. Zwischen den einzelnen Zugaben werden verschiedene Dispergierverfahren (Dissolverscheibe, Rotor-Stator und/oder Ultraschallverfahren) angewendet. Die Gussmasse wird dann üblicherweise in einem Umlaufsystem gehalten und sukzessive dem Auftragswerk einer Beschichtungsanlage zugeführt. Aus dem Beschichtungsprozess gehen dann einseitig oder beidseitig beschichtete, aufgewickelte Elektrodenfolien hervor. Diese Elektrodenfolien werden in einem nachfolgenden Assemblierverfahren konfektioniert und gestapelt (Lagenfolge bei beidseitig beschichteten Folien: ...-Anodenmaterial-Metallfolie-Anodenmaterial-#-Separator-#-Kathodenmaterial-Metallfolie-Kathodenmaterial-#-Separator-#..., siehe **Figur 1**). Der so entstehende Stapel (mit typischerweise zwischen 3 und 300 Folienlagen) wird in einer Pouch-Folie (einem mehrlagigen Laminat aus Metall- und Kunststofffolien) eingepackt, und die Schichten werden in einem separaten Verfahren mit einem Lithiumionen leitenden Elektrolyten getränkt, der aus einem in einem organischen Lösungsmittel oder Plastifizierer gelösten Leitsalz besteht. Abschließend wird der LIPO formiert und kann durch ein geeignetes Messprogramm charakterisiert werden (Output-Ergebnisse: Energiedichte, Leistungsdichte, Zyklenstabilität).

Die Qualität einer LIPO-Zelle ist maßgeblich von der Qualität der Elektrodenfolien abhängig. Die Qualität der Elektrodenfolien hängt wiederum von der Partikelverteilung in den Rezeptmaterialien in der Gussmasse und ihrer Neigung zur Entmischung bzw. Sedimentation, also ihrer zeitlichen Stabilität, ab. Bei der Trocknung wird das Lösungsmittel (in der Regel zwischen 20% und 80% Massenanteil) ausgetrieben, wodurch in den entstandenen Schichten (Mikro-)Poren erzeugt werden. Die Qualität der Elektrodenfolie hängt des Weiteren von der Gleichmäßigkeit der Schichten und dem Zusammenhalt der Partikel untereinander bzw. der Haftung der Partikel auf dem Substrat ab.

Bei der Gussmasseherstellung hängt die Dispergierbarkeit/Suspendierbarkeit der die Interkalation bewirkenden Partikel von den eingebrachten Scherkräften ab, die wiederum von den rheologischen Eigenschaften des Lösungsmittels abhängen. Eine gute Verteilung der Leitfähigkeitszusätze und der Aktivmaterialien wird bei hohen Scherkräften erreicht, die insbesondere in viskosen Vorlagen erzeugt werden können, wobei allerdings auch viel Energie in das System eingetragen wird, was bei leichtflüchtigen Lösungsmitteln (z.B. Aceton, Sdp. 56°C) zur Verflüchtigung signifikanter Lösungsmittelanteile und dadurch zu Partikelbildung und Prozessproblemen beim Beschichtungsvorgang führt.

Die rheologische Stabilität und die Beständigkeit der Homogenität der Gussmasse werden vom Lösungsvermögen des Lösungsmittels und von der Natur des Binders im Lösungsmittel-Binder-System mitbestimmt. Beste Voraussetzungen sind mit langkettigen PVDF-Polymeren und einem dafür geeigneten Lösungsmittel mit verhältnismäßig hoher Viskosität gegeben (typischerweise NMP: Staudinger-Index in der Mark-Houwink-Gleichung: K= 48.8 x 10⁻⁶ ml/g, a= -0.68 (NMP)). Langkettige PVDF-Homopolymer-Binder mit Molekulargewichten von 4.7-110.0 x 10⁴ g/mol weisen in den getrockneten Schichten die besten Haftungseigenschaften auf, da die längeren Polymerketten die punktuellen Haftstellen besser in die Schicht übertragen, wie von dritter Seite gezeigt werden konnte. Das gilt für die Haftung der Feststoffbestandteile untereinander und für die Haftung der Feststoffbestandteile auf dem Substrat gleichermaßen.

Die hohe Kristallinität dieser Polymere (sie liegt in der Regel bei 50 bis 60%), hat den Nachteil einer sehr schlechten Löslichkeit in vielen Lösungsmitteln. Geeignet sind nur extrem polare, aprotische Lösungsmittel wie z.B. NMP; Aceton ist dagegen als Lösungsmittel für PVDF-Homopolymere bereits zu wenig polar; es kann sie nicht lösen, sondern nur bis zu einem gewissen Grad quellen (im "Polymer Data Handbook, Oxford University Press Inc, 199 wird auf S. 953 die Widerstandsfähigkeit gegenüber Aceton mit 30 min. und dessen Wirkung als ätzend angegeben). Um trotzdem eine Verwendbarkeit von leicht flüchtigen, günstigen und weniger giftigen Lösungsmittel zu erreichen, wurden Copolymere aus Vinylidenfluorid (VDF) und z.B. Hexafluorpropylen HFP (PVDF-HFP)) entwickelt, die sich durch eine geringere Kristallinität und höhere Polydispersität auszeichnen. So ist beispielsweise ein PVDF-HFP-Copolymer mit einer Kristallinität von 25% und einer Polydispersität von 2,1 im Handel erhältlich. Diese Copolymere zeichnen sich durch eine bessere Löslichkeit in weniger polaren aprotischen Lösungsmitteln aus und sind daher in der Regel acetonlöslich, fallen dabei aber kurzkettiger aus (das oben genannte, im Handel erhältliche Polymer besitzt ein mittleres Molekulargewicht Mn von ca. 28,0 x 10⁴ g/mol und Mw von ca. 59,0 x 10⁴ g/mol), was mit einem geringeren Binde- und Haftungsvermögen auf Substraten, wie z.B. auf einer metallischen Ableitfolie, und mit einer geringeren Stabilität (Topfzeit) der Gussmasse einhergeht. Die Stabilität der Gussmassen wird zusätzlich von den rheologischen Eigenschaften des Gesamtsystems bestimmt. NMP-Binderlösungen sind hierbei deutlich robuster gegenüber geringen Wasseranteilen, wie sie z.B. unter bestimmten Bedingungen durch Umgebungsfeuchte eingetragen werden können, als Aceton-Binderlösungen.

Die Kontrolle der Porosität der Elektrodenbeschichtung ist wichtig für die Elektrolytaufnahmefähigkeit und für die Zellperformance der Lithium-Polymer-Zelle. Die Porosität der erzeugten Beschichtungen ist abhängig vom Trocknungsprozess, vom Feststoffanteil der Gussmasse, vom Energieeintrag und von der Luftführung bei verschiedenen Trocknungsverfahren. Alle diese Faktoren sind maßgeblich von den physikalisch-chemischen Eigenschaften des Lösungsmittelsystems abhängig. Ein leicht flüchtiges Lösungsmittel (hoher Dampfdruck, niedriger Siedepunkt) führt zu einer schnellen Trocknung und zu einer hohen Porosität, was allerdings mit einer Inhomogenität der Binderverteilung einhergehen kann. Dabei wird der Polymerbinder durch die schnelle Verflüchtigung des Lösungsmittels auf der Folienoberseite an die Oberfläche transportiert und dort konzentriert, während die Unterseite der Schicht an Binderanteil verarmt, wodurch sich der Auftrag nach der Beschichtung wieder vom Substrat löst und die Elektrode sich nicht mehr prozessieren lässt bzw. der aus diesen Folien entstehende LIPO sehr hohe Übergangswiderstände aufweist.

Aceton als organisches Lösungsmittel zeichnet sich durch einen niedrigen Siedepunkt von 56°C und einen Dampfdruck von 246 hPa (20°C) aus. Durch den niedrigen Siedepunkt ist das Überführen des Lösungsmittels in die Gasphase wenig energieintensiv (zügiges Verdampfen selbst bei Raumtemperatur). Spätere Reinigungsarbeiten von mit Gussmasse benetzten Teilen sind nach einem schnellen Austrocknen der Gussmassereste einfach möglich. Aceton ist ein verhältnismäßig günstiges und wenig giftiges Lösungsmittel, was Prozesskosten und Handhabungskosten bedeutend verringert. Nachteilig wirkt sich bei acetonbasierten Gussmassen der hohe Dampfdruck aus, wenn es darum geht, die Gussmasse agglomeratfrei zu formulieren, da Antrocknungen am Rand von Vorlagebehältern und Werkzeugen während des Dispergierprozesses zu Verstopfungen im Auftragswerk führen, die auf gebildete Agglomerate zurückzuführen sind. Gängige Auftragswerke wie z.B. Schlitzgießer oder Rakel reagieren sehr sensibel auf Klümpchen und neigen zur Gießriefenbildung. Selbst Filtersysteme in einem Umlaufsystem bieten keine gute Lösung, da sie sich während des Gieß-Prozesses langsam zusetzen und damit den Prozessdruck der Gussmasse beeinflussen, was zu Ungleichmäßigkeiten im Schichttrend führt und im schlimmsten Fall die Zusammensetzung der Gussmasse verändert.

Weil die Fluor-Copolymere mit geringeren mittleren molaren Massen, die sich für die Verwendung von Aceton als Lösungsmittel eignen, aufgrund ihrer geringeren Kettenlängen schlechtere Haftungseigenschaften aufweisen, müssen sie bei der Gussmasseherstellung typischerweise mit höherem Massenanteil eingesetzt werden, was sich wiederum nachteilig auf die Zellperformance, die Energiedichte und die Kostenstruktur auswirkt. Viele Bindersysteme neigen außerdem dazu, mit Aceton als Lösungsmittel sehr sensibel auf Wasserspuren zu reagieren. Diese Lösungsmittel/Bindersysteme gelieren beim Kontakt mit Wasserspuren und werden innerhalb von Minuten hoch viskos. Dazu reichen Wasserspuren im Lösungsmittel oder in der Umgebungsluft aus, was die Topfzeit solcher Gussmassen erheblich verkürzt und die Prozesssicherheit negativ beeinflusst.

Im bei der Elektrodenfolienproduktion sehr verbreiteten NMP-Prozess wird NMP aufgrund seiner guten Lösungseigenschaften gegenüber PVDF-Polymer-Bindern als Lösungsmittel für die Gussmasseherstellung verwendet. Derartige Gussmassen besitzen sehr gute Haftungseigenschaften für die Haftung der Feststoffbestandteile untereinander und für die Haftung der Feststoffbestandteile auf dem Substrat. Allerdings ist die Kinetik der Lösungsprozesse langkettiger Homopolymerer PVDF's in NMP im direkten Vergleich mit kurzkettigeren fluorierten Copolymeren in Aceton mit der Folge gehemmt, dass trotz des hohen Lösungsvermögens die Lösungsgeschwindigkeit ca. 3-fach geringer ist als die Lösungsgeschwindigkeit der Copolymere. Aufgrund der deutlich besseren Haftungseigenschaften kann NMP in NMP-basierten Gussmassen in geringeren Massenanteilen eingesetzt werden als Aceton in acetonbasierten Gussmassen, was einen Kosten- und Prozessvorteil darstellt. NMP besitzt einen sehr hohen Siedepunkt und einen niedrigen Dampfdruck (Sdp. 203°C, Dampfdruck 32 Pa (20°C)). Dadurch kommt es einerseits nicht zu Gussmasse-Antrocknungen an den Werkzeugen wie voranstehend für acetonbasierte Gussmassen beschrieben, wodurch Verklumpungen und Gießriefen beim Beschichtungsprozess vermieden werden, aber andererseits wird viel Energie zum Austreiben des Lösungsmittels (zw. 30% und 80% Lösungsmittel-Massenanteil in den Gussmassen) und daher eine sehr lange Trockenstrecke in der Beschichtungsanlage benötigt, was einen großen Kostennachteil darstellt. NMP ist außerdem giftig und reproduktionstoxisch und daher unter sicherheitstechnischen Aspekten in der Produktion problematisch zu handhaben. So sind kontaminierte persönliche Schutzausrüstung (Handschuhe, Kleidung) oder Oberflächen lange Zeit eine potentielle Gefahrenquelle. NMP ist ca. 3-mal teurer als Aceton und hygroskopisch, was bei wasserempfindlichen Aktivmaterialien, wie sie typischerweise in LIPO's verwendet werden, eine Vortrocknung und erhöhten Prozessaufwand erforderlich macht.

Aus dem Stand der Technik ist die Verwendung von PVDF-Homo- oder Copolymer-Mischungen mit einer Mehrzahl von Lösungsmitteln bekannt:
US 2004/063805 offenbart implantierbare, medizinische Prothesen, z.B. Stents, die mit einer Beschichtung aus hochfluorierten Polymeren versehen sein können. Die hochfluorierten Polymere können aus einer Gruppe von Materialien sowie Mischungen dieser Materialien ausgewählt werden, die Polytetrafluoroethylen (PTFE), Polyvinylidenfluorid (PVDF), Copolymere von PVDF mit Hexafluoropropen (PVDF-HFP) oder Tetrafluoroethylen (PVDF-TFE) und viele weitere Materialien umfasst. Als Lösungsmittel für diese Materialien werden ganz allgemein fluorierte Lösungsmittel wie Perfluoro(2-butyltetrahydrofuran), Chlorfluoralkane, N,N-Dimethylacetamid (DMAc), N,N-Dimethylformamid (DMF), Dimethylsulfoxid (DMSO), Aceton, Cyclohexanon, eine Reihe von Dialkylketonen wie Methylethylketon (MEK) sowie N-Methylpyrrolidon (NMP) genannt.

US 6,290,733 beschreibt einen flüssigen Kleber, der zur Verbindung von Elektroden und Separatorfolien dient. Er wird dadurch hergestellt, dass ein geeignetes Polymer wie PVDF oder Polyvinylchorid (PVC) oder Mischungen von mehreren Polymeren in einem ersten Lösungsmittel gelöst wird, worauf ein mit dem Lösungsmittel mischbares, das Polymer jedoch nicht lösendes zweites Lösemittel in einer solchen Menge hinzugegeben wird, dass das Polymer nicht ausfällt.

WO 98/49737 offenbart PVDF-Polymere (Homopolymere und Copolymere) mit nur geringer Kopf-Kopf-Verknüpfung der Monomer-Einheiten als Bindemittel für Elektroden von Lithium-Polymer-Zellen, die aufgrund der Verknüpfungsstruktur des PVDF im Flüssigelektrolyt weniger quellen. Als Lösungsmittel für die Polymere werden N-Methyl-2-Pyrrolidon, DMF, DMAc. DMSO, Metamethylphospamid, Dioxan, Tetrahydrofuran (THF), Tetramethylharnstoff und spezielle Trialkylphosphate sowie deren Mischungen genannt, unter denen stickstoffhaltige Lösungsmittel bevorzugt seien.

CN 1441507 schlägt vor, zur Herstellung eines PVDF-Films für Lithiumionen-Akkumulatoren THF mit Aceton und Wasser mit Alkohol zu mischen, diese beiden Gemische in einem speziellen Verhältnis zu mischen und mit PVDF-HFP zusammenzugeben.

US 2010/297489 behandelt die Herstellung von elektrochemischen Zellen mit mikroporösen PVDF-Membranen als Separatoren, die über einen "Kleber" mit den Elektroden verbunden sind. In den Beispielen wird eine Mischung aus zwei PVDF-Homopolymern mit einem PVDF-HFP-Copolymeren eingesetzt. Der Kleber besteht aus einer Mischung eines Lösungsmittels, das PVDF lösen kann, mit einem für die Lösung von PVDF ungeeigneten Lösemittel mit einer geringeren Oberflächenenergie, verglichen mit der des PVDF-Iösenden Lösungsmittels. Das PVDF-Iösende Lösungsmittel soll dieses soweit anlösen, bis das PVDF-Material klebrig wird, ohne seine Struktur zu verlieren. Als PVDF-Iösendes Lösungsmittel werden Methylformat, Aceton, Methylacetat, THF und viele andere genannt; in den Ausführungsbeispielen wird Isopropanol als zweites Lösemittel zugesetzt.

US 2004/214089 beschreibt ein Verfahren zur Herstellung eines zweischichtigen Separators für eine Lithium-Sekundärbatterie. Dieser wird durch Aufbringen einer Mischung aus einem lonenleiter, beispielsweise einem perfluorierten lonomer, einem Polymer, beispielsweise PVDF-HFP oder PVDF-TFE und einem anorganischen Material wie Aluminiumoxid oder Zeolith auf einer ersten, porösen Polymermatrix erzeugt. Gemäß den Beispielen wird für die Mischung Aceton/Methanol als Co-Lösemittel in Ergänzung des lonenleiters verwendet, wobei das CoSolvens anschließend abgedampft wird.

US 2004/0241550 beschreibt die Herstellung eines mehrlagigen, ionisch leitenden Gelelektrolyten, der durch die Verwendung eines Polymeren aus Lösung erzeugt wird. Das erste Lösungsmittel fungiert als Lösungsvermittler zwischen dem Polymer und dem zweiten Lösungsmittel, es lässt sich aus der Mischung leicht wieder austreiben. Das zweite Lösungsmittel fungiert als Porenbildner; es kann das Polymer nicht lösen, gegebenenfalls aber aufquellen. Als Polymer werden PVDF, Polyurethan, Polyethylenoxid und viele weitere Materialien vorgeschlagen, als erstes Lösungsmittel können u.a. THF, Methylethylketon, Aceton oder Glyme-Lösungsmittel mit niedrigen Molekulargewicht dienen. Das zweite Lösungsmittel ist weniger flüchtig als das erste und wird vorzugsweise unter C₃-C₄-Alkoholen ausgewählt.

Die am 4. September 2013 veröffentlichte EP 2 634 842 A1 betrifft einen Separator mit einer Beschichtung, die aus organischen und anorganischen Komponenten besteht. Als Bindemittel dient eine Kombination aus PVdF-Homopolymer und PVdF-HFP-Copolymer. Für die Herstellung der Beschichtung werden Gussmassen eingesetzt, für die das Homopolymer in einer Reihe von Lösungsmitteln wie Dimethylformamid oder N-Methylpyrrolidon und das Copolymer in Aceton gelöst werden können. Das Bindemittel enthält anorganische Teilchen aus Oxiden des Aluminiums, Siliciums, Bors, Galliums, Titans und Zinns.

Aufgabe der vorliegenden Erfindung ist die Bereitstellung neuer Gussmassen, die die Nachteile der vorstehend erläuterten Gussmassen nicht aufweisen und sich gut dafür eignen, auf geschlossene, nicht vorbehandelte Metallfolien aufgetragen zu werden. Die Gussmassen sollen sich mit elektrochemisch aktiven bzw. aktivierbaren Partikeln hoch füllen lassen, und die auf Metallfolien aufgetragenen Massen sollen eine sehr gute Haftung besitzen, so dass ein ausgezeichneter Kontakt zwischen den elektrochemisch aktiven Partikeln und den als Ableiter fungierenden Metallfolien hergestellt werden kann. Die Leistungs- und Energiedichte von unter Verwendung solcher Gussmassen gefertigten Zellen soll dabei gegenüber in vergleichbarer Weise konventionell gefertigten Zellen nicht geringer ausfallen, d.h. die Durchtrittwiderstände sollen nicht reduziert und die benötigten Binderanteile nicht höher sein.

Gelöst wird die Aufgabe durch die Bereitstellung einer Gussmasse, geeignet zur Verwendung als Binder in Elektroden- oder Separatorbeschichtungsmaterialien, umfassend die folgenden Komponenten:
a. ein fluoriertes Homopolymer mit einem mittleren Molekulargewicht Mn über 50x10⁴ g/mol und mit einer solchen Kettenlänge, dass sich dieses Homopolymer in einem unter Aceton, THF und MEK ausgewählten aprotischen Lösungsmittel bei Raumtemperatur und ohne In-Bewegung-Halten des aus Polymer und Lösungsmittel bestehenden Systems über einen Zeitraum von 24 h hinweg nicht in eine klare Lösung überführen lässt,
b. ein Copolymer dieses Homopolymeren mit einer geringeren Kettenlänge derart, dass sich dieses Copolymer in einem unter d. unten genannten Lösungsmittel bei Raumtemperatur und, ohne In-Bewegung-Halten, des aus Polymer und Lösungsmittel bestehenden Systems zumindest in einer Konzentration von 10 Gew.-% nach spätestens 24 h vollständig aufgelöst hat,
c. ein erstes Lösungsmittel, ausgewählt unter NMP, DMSO, DMF, DMAc und NEP und Mischungen aus zweien oder mehreren dieser Lösungsmittel, und
d ein zweites Lösungsmittel, ausgewählt unter Aceton, THF und MEK und Mischungen aus zweien oder mehreren dieser Lösungsmitteln, wobei die genannten Komponenten a. bis d. als solche, wenn Komponente a. zuerst in Lösung gebracht wird, eine homogene Lösung ohne Phasenseparation bilden,sowie weiterhinein partikelförmiges Material, das sich als Elektrodenmaterial eignet oder ein Festkörperelektrolyt ist oder sich in einer Batterie oder einem Akkumulator inert verhält, worin das partikelförmige elektrochemisch aktive Material ausgewählt ist unter Lithiumeisenphosphat, Lithiumtitanat, Lithium-Mangan-Spinell, Lithiummanganphosphat, Lithiumnickelcobaltaluminiumoxid, mischoxidischen Lithium-Einlagerungsmaterialien sowie lithiumionenleitenden Materialien, insbesondere Lithiumaluminiumtitanat und lithiumionenleitenden Keramiken.

Unter dem Ausdruck "ausschließlich laminares Rühren" soll erfindungsgemäß verstanden werden, dass für den Fall, dass das jeweilige System Polymer/Lösungsmittel für den Auflösevorgang gerührt wird, das Rühren so durchgeführt wird, dass die Reynolds-Zahl im System jederzeit kleiner ist als die kritische Reynolds-Zahl des Systems. Bleibt die tatsächliche Reynolds-Zahl beim Rühren unter dem kritischen Wert, bleibt die Strömung im System laminar und damit die lokale Energiedissipation gering. Würde dagegen die kritische Reynolds-Zahl überschritten, würde die Strömung von laminar in turbulent umschlagen.

Zumindest unter Einhaltung einer bestimmten Abfolge von Schritten im Verlauf des Lösungsprozesses gelingt die Herstellung einer homogenen, sämtliche Substanzen a) bis d) enthaltenden Gussmasse, ohne dass eine Entmischung (Phasenseparation) zu beobachten wäre. Diese Gussmasse vereinigt überraschenderweise die vorteilhaften Eigenschaften der beiden einzelnen Systeme in synergistischer Weise.

Nach dem aktuellen Stand der Technik und in der polymerchemischen Laborpraxis werden Polymere standardmäßig durch Phasenseparation aus einer Lösung ausgefällt. Dabei wird die Polymerlösung überschüssig mit einem zweiten Lösungsmittel versetzt, in dem das Polymer der Polymerlösung schlecht/nicht löslich ist. Die vorhandenen Lösungsmittel mischen sich dabei entropisch begünstigt. Die Konzentration des ursprünglichen Lösungsmittels wird in der direkten Polymerkettenumgebung verringert und durch das zweite Lösungsmittel, in dem das Polymer schlecht/nicht löslich ist, ersetzt. Im Vergleich zu den Polymer-Lösungsmittel-Wechselwirkungen steigt bei der Verdünnung des ursprünglichen Lösemittels die Attraktivität der Polymer-Polymer-Kettenkontakte im Polymerknäuel, wodurch die Polymerknäuel kollabieren und ausfallen. Das Ausfallen kann als Phasenseparation und Entmischung betrachtet werden und ist enthalpisch begünstigt.

Daher sollte ein Polymer, das in einem geeigneten Lösungsmittel gelöst ist, ausfallen (d.h. unlöslich werden), sobald dieses durch ein "ungeeignetes" Lösungsmittel ausreichend verdünnt oder verdrängt wird, da die Polymerkonzentration relativ zu dem "geeigneten" Lösungsmittel zu hoch wird, während die nicht-lösende Lösungsmittelkomponente überwiegt und die Polymer-Polymer-Wechselwirkungen steigen.

Die Erfinder mussten darüber hinaus feststellen, dass ein fluoriertes, nur in sehr polaren Solventien lösliches Homopolymer wie ein hochmolekulares PVDF-Homopolymer dann, wenn es mit einem "ungeeigneten" weniger polaren Lösungsmittel wie Aceton, THF oder MEK zusammengegeben wird, in diesem quillt, da die Polarität des Lösungsmittels nicht ausreicht, um das Homopolymer zu lösen. Dabei entsteht zunächst eine trübe, viskose Lösung, die sich innerhalb mehrerer Stunden in ein kompakt geliertes Material umwandelt. Weitere Veränderungen können bei Raumtemperatur nicht mehr beobachtet werden. Die kompakt gelierte Phase lässt sich überraschenderweise bei Raumtemperatur auch durch Zusatz einer tolerablen Menge eines "geeigneten" Lösungsmittels wie NMP und einer für die Lösung des "trockenen" Materials bei weitem ausreichenden Lösungsmittelmenge nicht mehr in Lösung überführen, vielmehr beobachtet man eine zweite Phase aus NMP, die sich mit dem gelierten Material nicht mischt. Eine Verwendbarkeit der elektrochemisch und wirtschaftlich bevorzugten fluorierten Homopolymere zusammen mit einem ungiftigen und billigen Lösungsmittel wie Aceton kann daher ausgeschlossen werden.

Völlig überraschend war daher die Erkenntnis der Erfinder, dass sich Gussmassen herstellen lassen, die die Vorteile von acetonbasierten Gussmassen, nämlich Einsatz eines billigen, nichttoxischen Lösungsmittels, mit den Vorteilen von NMP-basierten Gussmassen auf sich vereinigen. Diese Vorteile sind:
- Die Haftung der aufgetragenen Schicht ist deutlich verbessert gegenüber einer reinen acetonhaltigen Gussmasse und entspricht fast der einer vergleichbaren NMP-haltigen Gussmasse (mit einem Tape-Test kann gezeigt werden, dass reine Aceton-basierte Systeme auf unvorbehandelten Metallfolien (z.B. Al, Cu) schlecht haften. Systeme auf NMP-Basis wie oben beschrieben haften unter denselben Bedingungen dagegen hervorragend. Bei Einsatz der erfindungsgemäßen Binären-Mischungen ergibt sich eine verhältnismäßig gute Haftung, und zwar bereits bei geringen Anteilen von NMP-Binderlösung). Aufgrund der verbesserten Haftung steigen die Innenwiderstände der Zellen beim wiederholten Laden und Entladen nicht so stark an, weil die üblicherweise auftretende Gasbildung sich nicht im bisherigen Maße nachteilig auf die Grenzfläche zwischen Metallfolie und elektrochemisch aktiver Schicht auswirken kann, da sich das Gas aufgrund der Erfindung nicht zwischen den innig verhafteten Metallfolien oder Streckmetallen und elektrochemisch aktiven Schichten ansammeln kann. Dadurch steigt die Energieeffizienz und die Coulombeffizienz, speziell bei hohen Lade- und Entladeraten.
- Die Trocknung der Beschichtung ist ohne lange, NMP-spezifische Trockenstrecke zu erreichen.
- Der Auftrag zeigt keine Tendenz, beim Aufwickeln zu verkleben.
- Die Gussmasse zeigt keine Tendenz, Partikel (Verkrustungen) zu bilden und damit den

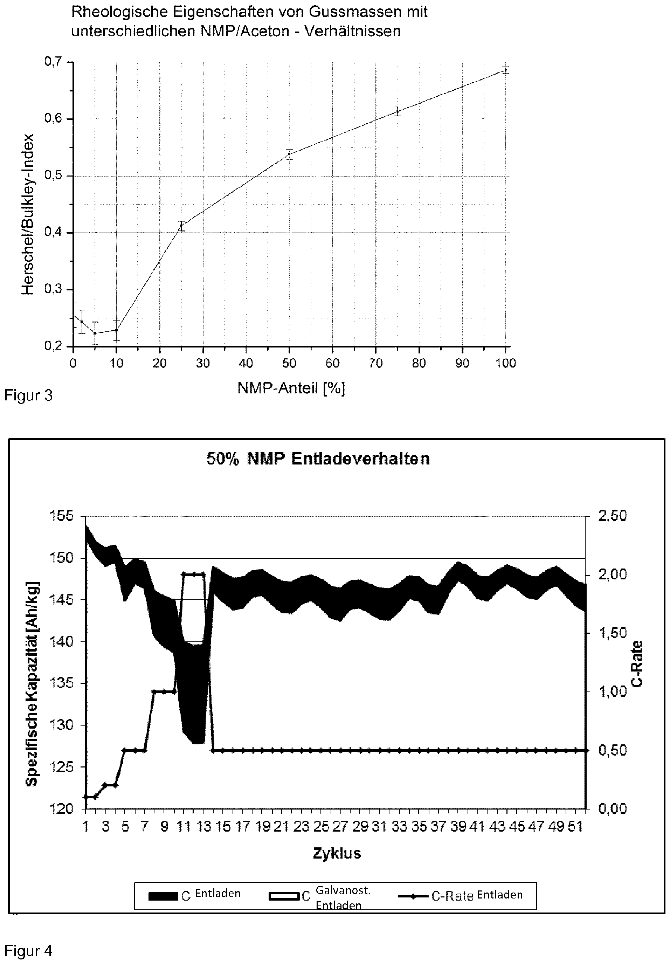

Gießprozess zu beeinträchtigen.
- Die Gussmasse zeigt ein günstiges rheologisches Verhalten. Durch die Zugabe von einigen Prozent der NMP-Binderlösung sinkt die Fließgrenze und es stellt sich ein ausgeprägtes scherverdünnendes Verhalten ein (Siehe **Figur 3****:** Auftragung der Herschel/Bulkeley-Indexe nach der Herschel/Bulkeley-Approximation). Das Gesamtsystem wird bei hohen NMP-Anteilen "Newtonscher", siehe **Figur 2****.**
- Die Gussmasse besitzt unter normalfeuchter Umgebungsatmosphäre eine erhöhte Topfzeit.
- Die Porosität der entstehenden Elektrodenfolien ist hoch und kann daher gut durch einen

Kalandrierprozess kontrolliert werden.
- Das Austreiben des Lösungsmittels benötigt nur einen geringen Energieaufwand und kann bei materialschonenden Temperaturen durchgeführt werden.
- Es ergeben sich Kostenvorteile durch die Verwendung von Aceton anstatt NMP
- Es ergeben sich Handhabungsvorteile durch den verringerten Einsatz von giftigen Lösungsmitteln.

Diese Gussmassen enthalten sowohl eine fluoriertes Homopolymer mit hoher Kettenlänge und hohem Schmelzpunkt, das sich in einem weniger polaren Lösungsmittel wie Aceton nicht löst, ein fluoriertes Copolymer des Homopolymeren mit einem geringeren Molekulargewicht und einem niedrigeren Schmelzpunkt, das in Aceton oder dergleichen löslich ist, sowie eine Mischung aus einem ersten Lösungsmittel, dessen Polarität ausreicht, um das Homopolymere zu lösen, und einem zweiten Lösungsmittel, das weniger polar sein kann und daher unter Lösungsmitteln ausgewählt werden kann, die billig, nichttoxisch und stark flüchtig sind.

Obwohl sich, wie oben gezeigt wurde, in Aceton gequollene fluorierte Homopolymere durch den Zusatz von NMP nicht mehr auflösen lassen, ist es möglich, Gussmassen auf Basis von Aceton herzustellen. Man erhält sie jedoch nicht durch beliebiges Zusammengeben der Komponenten. Voraussetzung ist, dass das fluorierte Homopolymer erst einmal in Lösung gebracht wird, bevor es mit den anderen Komponenten zusammengegeben wird. Dagegen ist es ohne Bedeutung, ob das Copolymer zuerst in demselben Lösungsmittel gelöst wird und ggf., ob die Lösung gemeinschaftlich oder getrennt erfolgt oder ob es zuerst in dem weniger polaren Lösungsmittel gelöst wird, worauf die beiden Lösungen miteinander vermischt werden.

Das Gewichtsverhältnis zwischen fluoriertem Homopolymer und Copolymer ist dem Grunde nach nicht kritisch. Geeignete Bereiche liegen zwischen 1:30 und 30:1. Günstig ist es, einen höheren Anteil an fluoriertem Copolymer einzusetzen als an fluoriertem Homopolymer. Bevorzugte Masse-Verhältnisse liegen zwischen 1: 20 und 1:2, besonders bevorzugt zwischen 1:8 und 1:3. Als Beispiel sei ein Verhältnis von 1:4 angegeben.

Es ist bevorzugt, den Anteil des ersten, polareren Lösungsmittels geringer zu halten als den des zweiten, weniger polaren Lösungsmittels. Das Gewichtsverhältnis liegt vorzugsweise bei bis zu 1:30, beispielsweise im Bereich von 1:2 bis 1:30, stärker bevorzugt im Bereich zwischen 1:5 und 1:10.

Ein bevorzugtes fluoriertes Homopolymer ist in allen Fällen der Erfindung ein Polyvinylidenfluorid (PVDF). Dessen Kristallinität ist dem Grunde nach nicht kritisch; sie kann bei über 50% liegen. Bevorzugt besitzt das Homopolymer einen Schmelzpunkt im Bereich von über 150°C, stärker bevorzugt im Bereich von 160°C bis 190°C. Das Molekulargewicht Mn liegt vorzugsweise im Bereich von über 20 x 10⁴, stärker bevorzugt von über 30 x 10⁴, der Quotient Mn:Mw liegt vorzugsweise bei etwa 2,0-2,4, vorzugsweise bei 2,2. Zur besseren Auflösbarkeit ist es günstig, möglichst kleine Partikelgrößen des pulverförmig vorliegenden Materials zu verwenden.

Wenn PVDF als Homopolymer verwendet wird, kann das Copolymer ein beliebiges Vinylidenfluorid-Copolymer sein, beispielsweise in Kombination mit Hexafluoropropylen (HFP) oder Chlortrifluorethylen (CTFE). Dessen Schmelzpunkt sollte unterhalb des Schmelzpunktes des Homopolymeren liegen, z.B. bei 145-158°C; das Molekulargewicht liegt in der Regel bei maximal 12 x 10⁴, insbesondere im Bereich von 60 x 10³ bis 12 x 10⁴, häufig bei ca. 85 x 10³.

Die erfindungsgemäßen Gussmassen lassen sich füllen, ohne dass eine Phasenseparation stattfinden würde. Der Füllgrad kann sehr hoch sein. Daher lassen sich auch hoch gefüllte Gussmassen herstellen, wie man sie zur Herstellung von Elektroden- oder Elektrolytfolien benötigt (z.B. durch Beimischung von einzelnen Füllstoffen in einer Menge von jeweils bis zu ca. 80 Gew.-% (aktives Elektrodenmaterial, Graphit, Ruß, Festkörperelektrolyt, inerter Füllstoff), so dass sich eine Füllung von ca. 40-95, vorzugsweise ca. 70-90 Gew.-% Füllstoff, bezogen auf den Gesamt-Feststoffanteil (Füllstoffe plus fluoriertes Polymer) und damit den Füllstoff-Anteil in der späteren Elektroden- oder Separatorschicht ergibt.

Gussmassen für die Herstellung von Separator-/Elektrolytfolien enthalten bevorzugt Füllstoffe, die zumindest teilweise, vorzugsweise aber ausschließlich die Eigenschaft von Festkörperelektrolyten haben. Diese können ausgewählt sein unter allen bekannten Festkörperelektrolyt-Materialien in kristalliner, teilkristalliner, aber auch ungeordneter Form, also auch in Gläsern wie Li-Phosphatgläsern sowie in Keramiken und Glaskeramiken. Beispiele sind Materialien mit einer mehr oder weniger hohen Leitfähigkeit für Lithiumionen, insbesondere Lithiumaluminiumtitanat, des weiteren beispielsweise Materialien mit der Zusammensetzung Li_{1,3}Al_{0,3}Ti_{1,7}(PO₄)₃, LiTaO₃·SrTiO₃, LiTi₂(PO₄)₃·LiO₂, LiH₂(PO₄)₃·Li₂O, Li₄SiO₄·Li₃PO₄, LiX + ROH mit X=Cl, Br, I (1, 2 oder 4 ROH pro LiX), und lithiumionenleitende (Glas-)Keramiken. Inerte Partikel, insbesondere Oxide wie Al₂O₃, SiO₂, B₂O₃, Ga₂O₃, TiO₂ oder SnO₂, sind dagegen deutlich weniger günstig, da ihre Anwesenheit es notwendig macht, der fertigen Batterie ein flüssiges Elektrolytmaterial zuzusetzen, oder aber ihre Gegenwart erniedrigt die GesamtFestkörper-Leitfähigkeit der Elektrolytfolie.

Nachstehend wird die Erfindung anhand von Beispielen und Vergleichsbeispielen näher erläutert.

### A: Vorversuche mit einem Polymer und einem Lösungsmittel

Eingesetzte Polymere:
Polymer A = Solef 5130 der Fa. Solvay Solexis, (für Europa: Solvay Solexis S.p.a, Bollate (Miland), Italien), NMP-löslich, aber nicht acetonlöslich
Polymer B = Kynar Polerflex LBG der Fa. Arkema (USA: Arkema Inc., King of Prussia, OA 19406, USA), aceton- und NMP-löslich
Polymer C = Solef 6020 der Fa. Solvay Solexis, NMP-löslich, aber nicht acetonlöslich.
V1: 10 g Polymer A wird mit 100 g NMP versetzt → klare, gelbliche viskose Lösung
V2: 10 g Polymer A werden mit 100 g Aceton versetzt → es entstehen große phasenseparierte Anteile, die ungelöst bleiben, darüber steht eine trübe Lösung.
V4: 10 g Polymer B werden mit 100 g NMP versetzt → klare, gelbliche, viskose Lösung
V5: 10 g Polymer B wird mit 100 g Aceton versetzt → leicht opake Lösung
V6: 10 g Polymer C werden mit 100 g NMP versetzt → klare, gelbliche, viskose Lösung
V7: 10 g Polymer C werden mit 100 g Aceton versetzt → es entsteht zuerst eine trübe, viskose Lösung, die nach 24 h vollständig in eine kompakte, fest gelierte Phase übergegangen ist.
Wassergehalt der Lösungsmittel: Aceton <0.05%; NMP <0.1% Wassergehalt.

Es zeigt sich also eine typische Unverträglichkeit von NMP-Prozess-tauglichen Fluor-HomoPolymeren (Polymer A und C) mit Aceton als Lösungsmittel. Es kommt zum Gelieren, und anstatt einer Löslichkeit tritt eine unvollständige Quellung auf, so dass ein fester Bodensatz zurückbleibt (V2 und V7). NMP löst hingegen alle Aceton-Prozess und NMP-Prozess taugliche Polymere unter Ausbildung einer klaren, gelblichen, stabilen, hoch viskosen Lösung (V1, V4, V6).

### B: Vorversuche mit einem Polymer und zwei Lösungsmitteln

V3: 10 g Polymerlösung aus V1 (Polymer A in NMP) wurden zu 100 g Aceton zugegeben → klare, niederviskose, stabile Lösung
V8: 10 g Polymerlösung aus V6 (Polymer C in NMP) wurden zu 100 g Aceton zugegeben → klare, niederviskose, stabile Lösung
V9: die unvollständig gelöste Substanz aus V2 wird mit 10 g NMP versetzt → es entsteht eine trübe, viskose Lösung mit großen unlöslichen, phasenseparierten Anteilen. Man kann keine weitere Phasenseparation oder sonstige Veränderungen beobachten, auch nach 24 h nicht.
V10 Die gelierte Substanz aus V7 wird mit 10 g NMP versetzt → die feste, kompakt gelierte Phase ändert sich nicht, das NMP liegt als separate Phase vor. Auch nach 24 h ist keine Veränderung zu verzeichnen.

### C: Erfindungsgemäße Beispiele für Gussmassen mit zwei Polymeren und zwei Lösungsmitteln:

C1: Die gemäß V5 entstandene Lösung wurde mit einer Lösung gemäß V1 versetzt.
C2: Der Vorversuch V5 wurde mehrfach modifiziert, indem neben einem Feststoffgehalt von 10% Feststoffgehalte von 20%, 30%, 40%, 50% und 60% verwendet wurden. Der Vorversuch V6 wurde modifiziert, indem statt eines Feststoffgehalts von 10% Feststoffgehalte von 5%, 10% und 15% verwendet wurden. Jede der Modifikationen von V5 wurde mit allen Modifikationen von V6 durchgetestet.

Überraschenderweise entstehen bei Zugabe von überschüssigem Aceton zu den NMP basierten Binderlösungen in jedem Fall stabile und klare Lösungen, ohne dass durch die überschüssige Acetonkomponente eine Unverträglichkeit auftritt oder es zum Gelieren kommt.

### D: Erfindungsgemäße Beispiele für mit Elektrodenmaterialien befüllte Gussmassen

### D1: Kathodenmaterial

Arkema Kynar Powerflex LBG wurde in Aceton gelöst. Solef 5130 wurde in NMP gelöst. Die Lösungen wurden vereinigt und mit aktivem Elektrodenmaterial, Graphit und Ruß befüllt. Die Konzentrationen und Anteile wurden so gewählt, dass die folgende Zusammensetzung (in Masse-%) entstand:

| | Feststoff-% | Gesamtmenge-% |
|---|---|---|
| Graphit | 2 | 1 |
| Lithiumeisenphosphat | 81 | 40 |
| Ruß | 7 | 3 |
| Kynar Powerflex LBG | 8 | 4 |
| Solef 5130 | 2 | 1 |
| Aceton | | 45 |
| NMP | | 5 |

### D2: Anodenmaterial

Arkema Kynar Powerflex LBG wurde in Aceton gelöst. Solef 6020 wurde in NMP gelöst. Die Lösungen wurden vereinigt und mit aktivem Elektrodenmaterial, Graphit und Ruß befüllt. Die Konzentrationen und Anteile wurden so gewählt, dass die folgende Zusammensetzung (in Masse-%) entstand:

| | Feststoff-% | Gesamtmenge-% |
|---|---|---|
| Graphit | 2 | 1 |
| Lithiumtitanat | 84 | 33 |
| Ruß | 4 | 2 |
| Kynar Powerflex LBG | 8 | 3 |
| Solef 6020 | 2 | 1 |
| Aceton | | 52 |
| NMP | | 8 |

### E: Herstellung von Kathoden- und Anodenfolien

### E1: Herstellung von Kathodenfolien

Zur Herstellung der Folie wurde die gemäß D1a hergestellte Gussmasse mit Hilfe eines Rakelverfahrens teils auf eine Aluminiumfolie, teils auf eine Kupferfolie aufgetragen. Beide Metallfolien waren 20 µm dick. Das aufgetragene Flächengewicht (trocken) lag bei ca. 80-180 g/m². Als Versuchsumgebung dient eine produktionsnahe Rolle-zu-Rolle Beschichtungslinie mit einer gesamten Trockenstrecke von ca. 10 m mit eingestellten Trocknungsparametern zw. 100°C und 200°C.

### E2: Herstellung von Anodenfolien

E2: Die Herstellung der Folie folgte wie unter E1a beschrieben, jedoch mit dem Anodenmaterial gemäß D2.

### F: Vergleichsversuch mit Anodenfolie

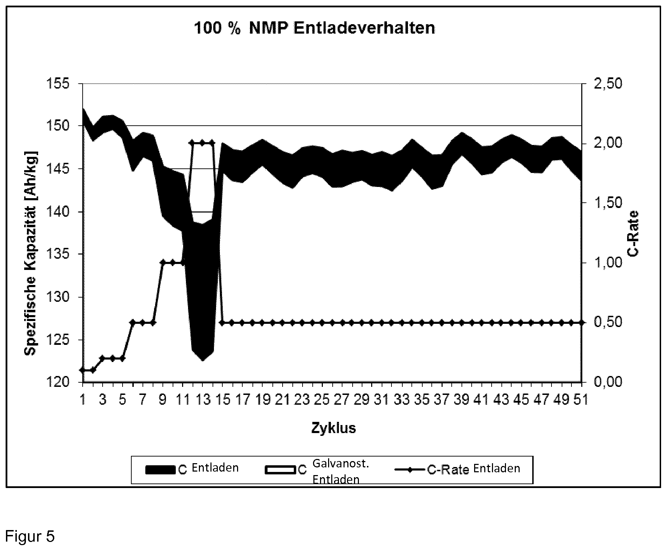

Es wurde eine erste Mischung aus 333 g Lithiumtitanat mit 20 g Ruß, 10 g Graphit und 30 g Kynar Powerflex LBG in 520 g Aceton hergestellt (Mischung A). Eine zweite Mischung aus 333 g Lithiumtitanat mit 20 g Ruß, 10 g Graphit und 30 g Kynar Powerflex LBG in 520 g NMP hergestellt (Mischung B). Die beiden Mischungen wurden in folgenden Mischungsverhältnissen (Mischung A: Mischung B) zusammengegeben: Figur 4 50:50, Figur 5 0:100. Die Herstellung der Folie folgte mit diesem Material wie unter E1 beschrieben.

Die **Figuren 4** **und** **5** zeigen die Entlade-Belastbarkeit von zwei verschiedenen Elektrodenfolien. Die in (a) gezeigte Folie wurde wie im Vergleichsversuch F gezeigt hergestellt, und zwar mit einem Verhältnis der Mischungen A und B von 50:50, während die in (b) gezeigte Elektrodenfolie unter ausschließlicher Verwendung der in Vergleichsbeispiel F definierten Mischung B beschrieben hergestellt war, d.h. als Lösungsmittel nur Aceton enthielt. Die Entlade-Belastbarkeit beider Folien wurde in einer Lithium-Polymer-Halbzellenumgebung bei Lade- und Entladeprozessen ermittelt. Es lässt sich erkennen, dass die Verwendung einer Kombination der beiden Lösungsmittel selbst bei Gussmassen, in denen nur ein einziges Polymer (hier Kynarflex LBG) verwendet wurde, zu einem vorteilhaften Lade- und Entladeverhalten führt. Die Verwendung von mehreren Bindern hat demgegenüber weitere Vorteile wie voranstehend geschildert.

Bei einem gegebenen Strom (C-Rate) wurden unterschiedliche, der Zelle entnehmbare Kapazitäten (ca. 2 mAh, bei C/10 Strömen) ermittelt, woraus sich eine unterschiedliche Belastbarkeit ableiten lässt. Die Elektrodenfolien, die mit dem neuartigen Verfahren hergestellt wurden, zeigen demnach eine erhöhte Belastbarkeit, was auf eine günstigere Porosität und Binderverteilung in den Elektrodenfolienschichten zurückgeführt werden kann und für viele Anwendungen ein Notwendiges Kriterium darstellt.

Außerdem ist zum Beispiel eine sehr gute Haftung der Auftragsmasse auf den Metallfolien zu beobachten, so dass die Ankontaktierung der elektrochemisch aktiven Partikel auf diesen Folien bevorzugt ist. Verringerte Durchtrittswiderstände und eine erhöhte Zykelstabilität derartiger Lithium-Polymer-Zellen sind weitere Vorteile dieses Verfahrens. Die Leistungs- und Energiedichte von Lithium-Akkumulatoren aus so hergestellter Elektrodenfolie ist durch die gute Kontaktierung besser, und die Wahl verschiedener Lösungsmittel und Binder führt zu verschiedenen weiteren Prozess- und Kostenvorteilen.

Die gute Haftung soll darüber hinaus vorteilhaft für die mechanische Assemblierung von Lithium-Akkumulatoren aus diesen Elektrodenfolien sein, so dass sich bei Schneidprozessen Abplatzungen der Schicht vermeiden lassen. Schneidprozesse von Ausgangsstoffen wie z.B. Elektrodenfolien- oder Separatorfolien-Wickeln werden in der Praxis durch Rollenmesseranordnungen realisiert. Ein Prüfverfahren, das das Verhalten von derartigen Ausgangstoffen bei Abscheren qualitativ wiedergibt, ist die Gitterschnittprüfung nach EN ISO 2409:2007. Während Beschichtungsstoffe, die aus einer Gussmasse hergestellt sind, die hälftig auf Basis von Kynar Powerflex LBG in Aceton (wie oben für Mischung A angegeben) und hälftig auf Basis von Kynar Powerflex LBG in NMP (wie oben für Mischung B angegeben) besteht, mit dem Gitterschnitt-Kennwert 1-2 zu beurteilen sind, sind Beschichtungsstoffe aus einer Gussmasse, die nur auf Kynar Powerflex LBG in NMP basiert (siehe Mischung B oben) mit dem Gitterschnitt-Kennwert 4-5 einzuordnen.

Die entstehende Gussmasse lässt sich vorteilhaft in einem Beschichtungsprozess auftragen und bevorzugt trocknen. Die entstehenden Elektrodenfolien zeigen große Vorteile bei der Prozessierbarkeit und der Belastbarkeit und der Zykelstabilität.

### Abkürzungsverzeichnis:

| | | | |
|---|---|---|---|
| **NMP** | N-Metyhlpyrrolidon (N-Methyl-2-pyrrolidon) | **MEK** | Methylethylketon (2-Butanon) |
| **PVDF** | Polyvinylidene Fluoride | **THF** | Tetrahydrofuran (Oxolan) |
| **HFP** | Hexafluorpropylen | **DMAc** | Dimethylacetamid (N,N-Dimethylacetamid) |
| **VDF** | Vinylidenfluorid | **DMF** | Dimethylformamid (n,N-Dimethylformamid) |
| **NEP** | N-Ethylpyrrolidon (N-Etyhl-2-pyrrolidon) | **PSA** | Persönliche Schutzausrüstung |
| **PVDF-HFP** | Poly(vinylidene fluoride-cohexafluoropropylene) | | |

## Patentansprüche

1. Gussmasse, geeignet zur Verwendung als Binder in Elektroden- oder Separatorbeschichtungsmaterialien, umfassend die folgenden Komponenten:
a. ein fluoriertes Homopolymer mit einem mittleren Molekulargewicht Mn von über 50 x 10⁴ g/mol und mit einer solchen Kettenlänge, dass sich dieses Homopolymer in einem unter Aceton, THF und MEK ausgewählten aprotischen Lösungsmittel bei Raumtemperatur und ohne In-Bewegung-Halten des aus Polymer und Lösungsmittel bestehenden Systems über einen Zeitraum von 24 h hinweg nicht in eine klare Lösung überführen lässt,
b. ein Copolymer dieses Homopolymeren mit einer geringeren Kettenlänge derart, dass sich dieses Copolymer in einem unter d. unten genannten Lösungsmittel bei Raumtemperatur und, ohne In-Bewegung-Halten, des aus Polymer und Lösungsmittel bestehenden Systems zumindest in einer Konzentration von 10 Gew.-% nach spätestens 24 h vollständig aufgelöst hat,
c. ein erstes Lösungsmittel, ausgewählt unter NMP, DMSO, DMF, DMAc und NEP und Mischungen aus zweien oder mehreren dieser Lösungsmittel, und
d. ein zweites Lösungsmittel, ausgewählt unter Aceton, THF und MEK und Mischungen aus zweien oder mehreren dieser Lösungsmitteln,
wobei die genannten Komponenten a. bis d. als solche, wenn Komponente a. zuerst in Lösung gebracht wird, eine homogene Lösung ohne Phasenseparation bilden, sowie weiterhin
ein partikelförmiges Material, das sich als Elektrodenmaterial eignet oder ein Festkörperelektrolyt ist oder sich in einer Batterie oder einem Akkumulator inert verhält, worin das partikelförmige elektrochemisch aktive Material ausgewählt ist unter Lithiumeisenphosphat, Lithiumtitanat, Lithium-Mangan-Spinell, Lithiummanganphosphat, Lithiumnickelcobaltaluminiumoxid, mischoxidischen Lithium-Einlagerungsmaterialien sowie lithiumionenleitenden Materialien, insbesondere Lithiumaluminiumtitanat und lithiumionenleitenden Keramiken.

2. Gussmasse nach Anspruch 1, worin das fluorierte Homopolymer ausgewählt ist unter Homopolymeren mit einem mittleren Molekulargewicht Mn von über 100 x 10⁴ g/mol.

3. Gussmasse nach einem der voranstehenden Ansprüche, worin das fluorierte Homopolymer einen Schmelzpunkt besitzt und/oder ein Polyvinylidenfluorid ist, das vorzugsweise kristallin ist.

4. Gussmasse nach einem der voranstehenden Ansprüche, worin das Copolymer einen Schmelzpunkt aufweist, der geringer als der Schmelzpunkt des fluorierten Homopolymeren ist und/oder ein Vinylidenfluorid-Copolymer ist, das vorzugsweise ein Molekulargewicht im Bereich von 60 x 10³ bis 12 x 10⁴ besitzt.

5. Gussmasse nach einem der voranstehenden Ansprüche, worin das Gewichtsverhältnis von fluoriertem Homopolymer zu Copolymer zwischen 1:20 und 1:2 liegt und/oder worin das Gewichtsverhältnis von erstem Lösungsmittel zu zweitem Lösungsmittel im Bereich zwischen 1:2 und 1:30, vorzugsweise zwischen 1:5 und 1:10 liegt.

6. Gussmasse nach einem der voranstehenden Ansprüche, enthaltend 30-80 Gew.-% partikelförmiges Material, bezogen auf das Gewicht der Gussmasse, und/oder 40-95 Gew.-% partikelförmiges Material, bezogen auf die Summe des Gewichts von partikelförmigem Material, fluoriertem Homopolymer und Copolymer.

7. Verwendung der Gussmasse nach einem der voranstehenden Ansprüche als Bestandteil oder zur Herstellung von folienförmigen elektrochemischen Bauelementen, ausgewählt unter Anoden, Kathoden und Separatoren, wobei die Gussmasse auf eine Metall- oder Kunststofffolie aufgebracht und anschließend getrocknet wurde/wird.

8. Verwendung nach Anspruch 7, worin die Metallfolie ein Streckmetall ist, das direkt oder indirekt beschichtet ist oder wird.

9. Verwendung nach Anspruch 7 oder 8, worin die Metallfolie eine Kupfer-, Nickel- oder Aluminiumfolie mit einer Folienstärke von vorzugsweise 10 bis 100 µm oder die Kunststofffolie eine PET-Folie mit einer Folienstärke von vorzugsweise 80 bis 120 µm ist.

10. Verwendung der Gussmasse nach einem der Ansprüche 1 bis 6 als Bestandteil oder zur Herstellung einer Lithium-Polymer-Zelle, wobei die Gussmasse auf eine Metall- oder Kunststofffolie aufgebracht und anschließend getrocknet wurde/wird und diese Folie als Kathoden-, Anoden- oder Separatorfolie in einen Stapel mit mindestens einer Kathodenfolie, einer Separatorfolie und einer Anodenfolie eingebracht wurde/wird, wobei jede der Kathodenfolien und Anodenfolien mit einem Ableiter versehen sind/werden und der Stapel so in ein Gehäuse eingebracht wurde/wird, dass die Ableiter von außen ankontaktierbar sind, das Gehäuse mit Elektrolytflüssigkeit befüllt und dann durch Versiegeln der Gehäusefolienberandung verschlossen wurde/wird.

11. Verfahren zur Herstellung einer Gussmasse nach einem der Ansprüche 1 bis 6, worin das fluorierte Homopolymer im zweiten Lösungsmittel und das Copolymer im ersten Lösungsmittel gelöst wird, die Lösungen vereinigt werden und gegebenenfalls das partikelförmige Material unter Rühren eingearbeitet wird.

12. Verfahren nach Anspruch 11, worin das partikelförmige Material nach dem Vereinigen der beiden Lösungen eingearbeitet wird oder vor dem Vereinigen der beiden Lösungen in eine dieser Lösungen eingearbeitet wird.

## Claims

1. A casting material suitable for use as a binder in electrode or separator coating materials, comprising the following components:
a. a fluorinated homopolymer having an average molecular weight Mn of more than 50 x 10⁴ g/mol and having a chain length such that this homopolymer cannot be transferred into a clear solution at room temperature in an aprotic solvent selected from acetone, THF and MEK and without agitation the system consisting of polymer and solvent over a 24-hour period,
b. a copolymer of this homopolymer having a lower chain length such that this copolymer has dissolved completely at least in a concentration of 10 wt .-% after 24 hours at the latest in a solvent recited under d. below at room temperature and without stirring the system consisting of polymer and solvent,
c. a first solvent selected from NMP, DMSO, DMF, DMAc and NEP and mixtures of two or more of these solvents, and
d. a second solvent selected from acetone, THF and MEK and mixtures of two or more of these solvents,
wherein the components a. to d. as such form a homogenous solution without phase separation, if component a. is brought into solution first, and
additionally comprising a particulate material which is suitable for use as an electrode material or is a solid electrolyte or is inert in a battery or an accumulator,
wherein the particulate electrochemically active material is selected from lithium iron phosphate, lithium titanate, lithium manganese spinel, lithium manganese phosphate, lithium nickel cobalt aluminum oxide, mixed oxide lithium intercalation materials, and lithium ion conductive materials, especially lithium aluminum titanate and lithium ion conductive ceramics.

2. The casting material according to claim 1, wherein the fluorinated homopolymer is selected from homopolymers having an average molecular weight Mn of more than 100 x 10⁴ g/mol.

3. The casting material according to any one of the preceding claims, wherein the fluorinated homopolymer has a melting point and/or is a polyvinylidene fluoride which is preferably crystallin.

4. The casting material according to any one of the preceding claims, wherein the copolymer has a melting point lower than the melting point of the fluorinated homopolymer and/or is a vinylidene fluoride copolymer preferably having a molecular weight in the range 60 x 10³ to 12 x 10⁴.

5. The casting material according to any one of the preceding claims, wherein the weight ratio of fluorinated homopolymer to copolymer is between 1:20 and 1:2 and/or wherein the weight ratio of first solvent to second solvent ranges between 1:2 and 1:30, preferably between 1:5 and 1:10.

6. The casting material according to any one of the preceding claims, containing 30-80% by weight of particulate material, based on the weight of the casting material, and/or 40-95% by weight of particulate material, based on the sum of the weight of particulate material, fluorinated homopolymer and copolymer.

7. The use of the casting material according to any one of the preceding claims as a component or for producing sheet-like electrochemical components selected from anodes, cathodes and separators, wherein the casting material was/is applied to a metal or plastic film and then dried.

8. The use according to claim 7, wherein the metal foil is an expanded metal which is or will be coated directly or indirectly.

9. The use according to claim 7 or 8, wherein the metal foil is a copper, nickel or aluminum foil having a foil thickness of preferably 10 to 100 µm or the plastic foil is a PET foil having a foil thickness of preferably 80 to 120 µm.

10. The use of the casting material according to one of claims 1 to 6 as a component or for the production of a lithium polymer cell, wherein the casting material has been/is applied to a metal or plastic film and then dried, and this film has been/is introduced as a cathode, anode or separator in a stack having at least one cathode foil, a separator foil and an anode foil, wherein each of the cathode foils and anode foils is provided with an arrester and the stack has been/is introduced into a housing such that the arresters can be contacted from the outside, the housing has been/is filled with electrolyte fluid and then sealed by sealing the housing film boundary.

11. A process for producing a casting material according to one of claims 1 to 6, wherein the fluorinated homopolymer is dissolved in the second solvent and the copolymer is dissolved in the first solvent, the solutions are combined and optionally the particulate material is incorporated with stirring.

12. The process according to claim 11, wherein the particulate material is incorporated after combining the two solutions or incorporated into one of these solutions prior to combining the two solutions.

## Revendications

1. Masse de moulage, convenant pour une utilisation comme liant dans des matériaux de revêtement pour des électrodes ou des séparateurs, comprenant les composants suivants:
a. un homopolymère fluoré avec un poids moléculaire moyen Mn de plus de 50 x 10⁴ g/mole et avec une longueur de chaîne telle que cet homopolymère ne puisse pas passer en une solution claire dans un solvant aprotique sélectionné parmi l'acétone, THF et MEK à la température ambiante et sans maintien en mouvement du système composé du polymère et du solvant pendant une période de 24 h,
b. un copolymère de cet homopolymère avec une plus petite longueur de chaîne, de telle manière que ce copolymère soit entièrement dissous au moins à une concentration de 10 % en poids après au plus 24 h dans un solvant parmi les solvants mentionnés ci-dessous à la température ambiante et sans maintien en mouvement du système composé du polymère et du solvant,
c. un premier solvant, sélectionné parmi NMP, DMSO, DMF, DMAc et NEP et des mélanges de deux ou plusieurs de ces solvants, et
d. un second solvant, sélectionné parmi l'acétone, THF et MEK et des mélanges de deux ou plusieurs de ces solvants,
dans laquelle lesdits composants a. à d. forment comme tels, lorsque le composant a. est d'abord mis en solution, une solution homogène sans séparation de phases,
ainsi qu'en outre un matériau particulaire, qui convient comme matériau d'électrode ou qui est un électrolyte à corps solide et présente un comportement inerte dans une batterie ou un accumulateur,
dans laquelle le matériau particulaire ayant une activité électrochimique est sélectionné parmi le phosphate de fer lithié, le titanate de lithium, le spinelle lithium-manganèse, le phosphate de manganèse lithié, l'oxyde de lithium-nickel-cobalt-aluminium, des matériaux d'oxydes mixtes d'inclusion de lithium ainsi que des matériaux conducteurs des ions lithium, en particulier l'aluminotitanate de lithium et des céramiques conductrices des ions lithium.

2. Masse de moulage selon la revendication 1, dans laquelle l'homopolymère fluoré est sélectionné parmi des homopolymères ayant un poids moléculaire moyen de plus de 100 x 10⁴ g/mole.

3. Masse de moulage selon l'une quelconque des revendications précédentes, dans laquelle l'homopolymère fluoré présente un point de fusion et/ou est un fluorure de polyvinylidène, qui est de préférence cristallin.

4. Masse de moulage selon l'une quelconque des revendications précédentes, dans laquelle le copolymère présente un point de fusion, qui est inférieur au point de fusion de l'homopolymère fluoré et/ou est un copolymère de fluorure de polyvinylidène, qui présente de préférence un poids moléculaire dans la plage de 60 x 10³ à 12 x 10⁴.

5. Masse de moulage selon l'une quelconque des revendications précédentes, dans laquelle le rapport pondéral de l'homopolymère fluoré au copolymère se situe entre 1:20 et 1:2 et/ou dans laquelle le rapport pondéral du premier solvant au second solvant se situe dans la plage entre 1:2 et 1:30, de préférence entre 1:5 et 1:10.

6. Masse de moulage selon l'une quelconque des revendications précédentes, contenant 30 - 80 % en poids de matériau particulaire, rapporté au poids de la masse de moulage, et/ou 40 - 95 % en poids de matériau particulaire, rapporté à la somme du poids du matériau particulaire, de l'homopolymère fluoré et du copolymère.

7. Utilisation de la masse de moulage selon l'une quelconque des revendications précédentes comme constituant ou pour la fabrication d'éléments de construction électrochimiques en forme de feuille, sélectionnés parmi des anodes, des cathodes et des séparateurs, dans laquelle la masse de moulage est/a été déposée sur une feuille de métal ou de matière plastique et ensuite séchée.

8. Utilisation selon la revendication 7, dans laquelle la feuille métallique est un métal déployé, qui est ou a été revêtu directement ou indirectement.

9. Utilisation selon la revendication 7 ou 8, dans laquelle la feuille métallique est une feuille de cuivre, de nickel ou d'aluminium, avec une épaisseur de feuille de préférence de 10 à 100 µm ou la feuille de matière plastique est une feuille de PET avec une épaisseur de feuille de préférence de 80 à 120 µm.

10. Utilisation de la masse de moulage selon l'une quelconque des revendications 1 à 6 comme constituant ou pour la fabrication d'une cellule lithium-polymère, dans laquelle la masse de moulage est/a été déposée sur une feuille de métal ou de matière plastique et ensuite séchée et cette feuille est/a été insérée comme feuille de cathode, d'anode ou de séparateur dans un empilement avec au moins une feuille de cathode, une feuille de séparateur et une feuille d'anode, dans laquelle chacune des feuilles de cathode et des feuilles d'anode est/a été munie d'un fil conducteur et l'empilement est/a été introduit dans un boîtier, de telle manière que les fils conducteurs puissent être contactés par l'extérieur, le boîtier est/a été rempli d'un liquide d'électrolyte et ensuite est/a été fermé par soudage du pourtour des feuilles du boîtier.

11. Procédé de fabrication d'une masse de moulage selon l'une quelconque des revendications 1 à 6, dans lequel on dissout l'homopolymère fluoré dans le second solvant et le copolymère dans le premier solvant, on réunit les solutions et on incorpore éventuellement le matériau particulaire par agitation.

12. Procédé selon la revendication 11, dans lequel on incorpore le matériau particulaire après la réunion des deux solutions ou dans une de ces solutions avant la réunion des deux solutions.
